(19) Europäisches Patentamt

European Patent Office

Office européen des brevets

(11) **EP 1 072 968 A2**

(12) **EUROPEAN PATENT APPLICATION**

(43) Date of publication:
31.01.2001 Bulletin 2001/05

(51) Int. Cl.⁷: **G05D 9/12**

(21) Application number: **00115989.6**

(22) Date of filing: **26.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.07.1999 IT UD990140**

(71) Applicant:
**Ranco Incorporated of Delaware
Wilmington, Delaware 19801-1612 (US)**

(72) Inventors:
• **Marchetti, Christophe
06390 Contes (FR)**
• **Muzzo, Paul
06000 Nice (FR)**

(74) Representative:
**Petraz, Gilberto Luigi et al
GLP S.r.l.
Piazzale Cavedalis 6/2
33100 Udine (IT)**

(54) **Method to produce devices to control the level or volume of water for domestic appliances and control devices thus obtained**

(57) Method to produce devices to control levels and volumes for domestic appliances, said control devices comprising a level measurer, a programming and timing element and valve means (15), wherein a step is provided to measure a univocal value detected by the measurer (12) made during a step in its production cycle, a step of writing said value in a memory (14) of the programming and timing element (timer) (13), a step to define a correction coefficient (k) correlated to the geometry and characteristics of the domestic appliance on which the control device (10) is installed, and a step to define, by the timer (13) and while the machine is working, every level which can be obtained inside the drum or receptacle (11) using said univocal value measured by the measurer (12) and said correction coefficient (k).

fig.1

EP 1 072 968 A2

**Description**

FIELD OF THE APPLICATION

This invention concerns a method to produce devices to control the level or volume of water in domestic appliances which comprise a drum which is filled during the operating cycle of the machine, for example a washing machine, a dish washer, a cleaning apparatus or similar machines.

The invention also concerns the control device obtained with this method.

The invention is applied in the field of devices used in domestic appliances to automatically measure and regulate the levels or volumes of a drum or receptacle during the sequence of the operating cycles of the machines.

The control devices according to the invention have improved operating characteristics, are more accurate and reliable over time, very flexible, a high degree of standardization and can be personalized according to the type of installation expected. Moreover, the production cycle of the control devices according to the invention is simplified and entails savings in terms of costs and procedures required.

BACKGROUND OF THE INVENTION

In domestic appliances, for example washing machines, dish washers or cleaning apparatuses for domestic or industrial use, the state of the art includes control devices whose function is to define a plurality of levels to which the drum or receptacle is filled during the operating cycles of the machine.

These control devices comprise at least a level measurer usually of the mechanical type, a programming and timing element, and valve means able to open and close a circuit to deliver the water according to the commands given by said programming and timing element.

Generally speaking and in the most common applications, such control devices define at least two levels, a minimum level which when detected normally activates a filling cycle, with possible times and delays established by the programming and timing element, and a maximum level at which the filling operations are normally stopped.

According to the type of apparatus and the operating cycle under way, the devices and in particular the relative level measurers can be pre-disposed to detect multiple levels of intervention, divided between said minimum and maximum levels.

Conventional level measurers are of various types; among them, membrane transducers are particularly widespread. These transform a pressure value into a level value and send a corresponding electric signal to a control system when a pre-set value is reached.

In recent years, in this field we have seen an ever more widespread use of timers and other programmers of an electronic type, by means of which the management of the intervention levels of the level measurers has been made subject to appropriately programmed management and control software.

However, the control procedure and the processes to calibrate the level measurers in the state of the art have problems and disadvantages which do not allow to obtain standardized products with a reliable and constant functioning over time.

In the state of the art, the production procedure provides a first step of rough calibration made at a first level of the production cycle, and a second step of fine calibration made on the substantially finished product, which serves to take the tolerance value to around a nominal value within the maximum limits allowed or established.

A narrow tolerance value of conventional level measurers is in the region of $\pm 3$ mm when measuring a level equal to 100 mm.

The nominal value of the level measurer is inserted into the memory of the programmer of the domestic appliance and used by it, while the real measurement value to which said specific measurer is calibrated is not actually known, and is equal to the nominal value plus or minus the established tolerance value.

To define the opening times for the valve in order to obtain the desired filling volume, the programmer makes the sum of the nominal time established by the level measurer and an additional filling time, normally constant according to the specific application.

Apart from the fact that it takes a long time, is expensive and entails operating difficulties, this consolidated procedure of producing and using the measurers does not allow to standardize the measurer thus obtained, or to ensure a constant precision irrespective of the machine on which it is installed.

Moreover, the accuracy of the levels measured is closely connected with the operating conditions of the measurer itself, and therefore progressively worsens as the measurer gets older.

The precision with which the appliance is filled, being linked to a fixed additional time, also depends on the tolerance of the valve through which the flow of water is delivered.

The usual production procedure necessarily imposes that the level measurer is calibrated in the production plant, but this does not allow any interface with the electronic part, assembled in other assembly places.

The present Applicant has devised and embodied this invention to overcome the shortcomings of the state of the art and to obtain further advantages as shown hereafter, and particularly to obtain an improvement in the precision and reliability over time of the level control devices.

## SUMMARY OF THE INVENTION

The invention is set forth and characterized in the respective main claims, while the dependent claims describe other characteristics of the main embodiment.

The main purpose of the invention is to achieve a production method for devices to control levels and volumes to be used in domestic appliances, for example washing machines, dish washers, cleaning apparatuses or similar, which will allow to improve their functioning in terms of reliability and precision with regard to the volume of water.

Another main purpose of the invention is to allow a wider initial calibration of the level measurer compared with what is conventionally possible, thus improving its performance in the final use.

Another purpose is to provide the possibility to correlate the functioning of the volume control device specifically to the specific application and to the characteristics of the machine on which it is installed.

A further purpose is to allow a rationalization of the production steps, saving time and operational steps.

Another purpose is to ensure that the level measurers can be standardized according to the required application and at the same time to provide the possibility to personalize the product according to the specific application.

Another purpose is to provide the possibility to correct, with the passing of time, deterioration and wear of the mechanical components of the level measurer.

The invention is embodied in a method to produce devices to control levels and volumes which no longer provides to use a nominal value of measurement of the level measurer associated with a range of tolerance, but which provides to use, in controlling the levels, the actual individual value measured relating to the calibration of every individual level measurer.

The specific value of every level measurer, that is to say, the value at which the measurer is triggered, is measured in a desired, single step of its production cycle, and inserted into the memory of the timer of the domestic appliance.

According to the invention, the timer uses this specific value, together with a correction coefficient or parameter which takes into account the geometry and the type of machine on which the measurer is applied, to regulate the filling levels used by the machine during the operating cycles.

In other words, the timer, knowing the calibration value of the measurer and knowing the geometry, with a tolerance depending on the application, of the drum or receptacle into which the water is introduced, is able to calculate the time needed to obtain the exact and specific value of the filling volume (or level) inside said drum or receptacle with a much greater precision than that of conventional devices.

This calculation consists of the simple product of the calibration time defined by the level measurer and the correction coefficient relating to the geometry of the drum.

Therefore, the precision of the value of the volumes obtained can be improved considerably, since it depends substantially on the precision with which the actual calibration value of the level measurer is obtained, which assumes a value at least less than $\pm 2$ mm and can reach $\pm 1$ mm, with respect to a minimum tolerance obtainable of $\pm 3$ mm on a measurement of 100 mm in traditional level measuring systems.

Moreover, the measurers made according to the invention can have a much higher range of tolerance, at least more than $\pm 5$ mm and as much as $\pm 10$ mm, with respect to that needed for traditional measurers in order to have a satisfactory result, if the geometry of the application allows.

According to a first embodiment of the invention, the actual level value of the measurer is measured with extreme precision, according to specific inspection techniques, at the end of the assembly line, and impressed thereon by means of a bar code, or inserted in a diskette, on a label or any other element which accompanies the product during its various production phases.

Then, this value is transcribed inside the memory of the timer and the whole is sent for assembly on the machine it is used with.

According to a variant, the value corresponding to the value of the level measurer is measured when said measurer is assembled onto the electronic component of the timer.

With such solutions, we have the advantage that long and complex calibration procedures are not required in the final step when the machine is assembled.

In a further evolution of the invention, the timer is predisposed to correct over time the functioning of the level measurer according to a law of ageing which takes into account the type of application, the type of machine, the number of filling cycles performed and other parameters connected to the functioning of the measurer.

## BRIEF DESCRIPTION OF THE DRAWINGS

These and other characteristics of the invention will be clear from the following detailed description of some preferential forms of embodiment, with reference to the attached drawings wherein:

Fig. 1      is a schematic view of a device to control level and volume for a domestic appliance made according to the invention;

Figs. 2a and 2b      show a flow chart of two possible alternatives for the production of a control device according to the invention;

Fig. 3     is a diagram, obtained experimentally, relating to the calculation of the correction coefficient which takes account of the geometry of the drum and the entity of the error in precision obtained with the invention;

Fig. 4     is a flow chart relating to the law of ageing used to regulate the functioning of the level measurer according to the invention.

## DETAILED DESCRIPTION OF PREFERENTIAL EMBODIMENTS

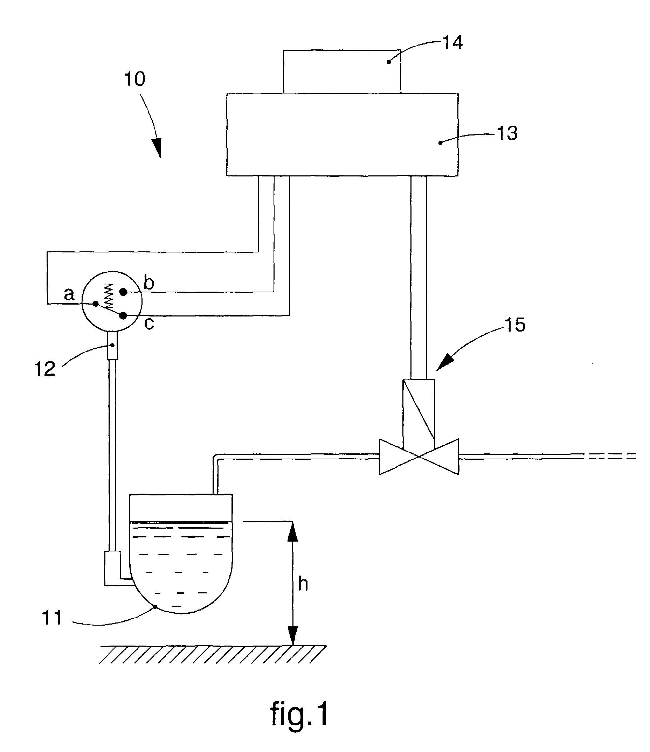

Fig. 1 shows an application of a device to control levels and volumes, indicated by the reference number 10, on a user machine, identified schematically by a drum or receptacle 11.

The application shown here should be intended as an example, since the invention can be applied also to other types of domestic appliance, such as for example cleaning apparatuses and similar.

The control device 10 consists in its entirety of a level measurer 12, a timer 13 equipped with an EPROM 14 and a valve 15 able to selectively open and close a circuit to feed the water into the drum 11. The measurer 12, in this case, is pre-disposed to define two distinct levels of water inside the drum 11 obtained by alternate and selective closing of the distinct contacts a, b and c.

The timer 13 is pre-disposed to command the opening of the valve 15 and to allow the water to be delivered inside the drum 11 until a defined filling volume is reached, for example corresponding to a level equal to "h" as shown in the Figure; when this level is reached, the timer 13 commands the valve 15 to close.

The method to produce the control device 10 according to the invention provides that the level measurer 12 is identified, during the production phase, by a specific and univocal calibration value corresponding to a measured level.

While the machine is working, this measured value is used by the timer 13, together with a correction coefficient based on the specific characteristics of the user machine, (and particularly on the geometry of the drum 11), to determine the various filling volumes used during the filling and emptying cycles, and in particular to calculate the opening times of the valve 15 to obtain such filling volumes.

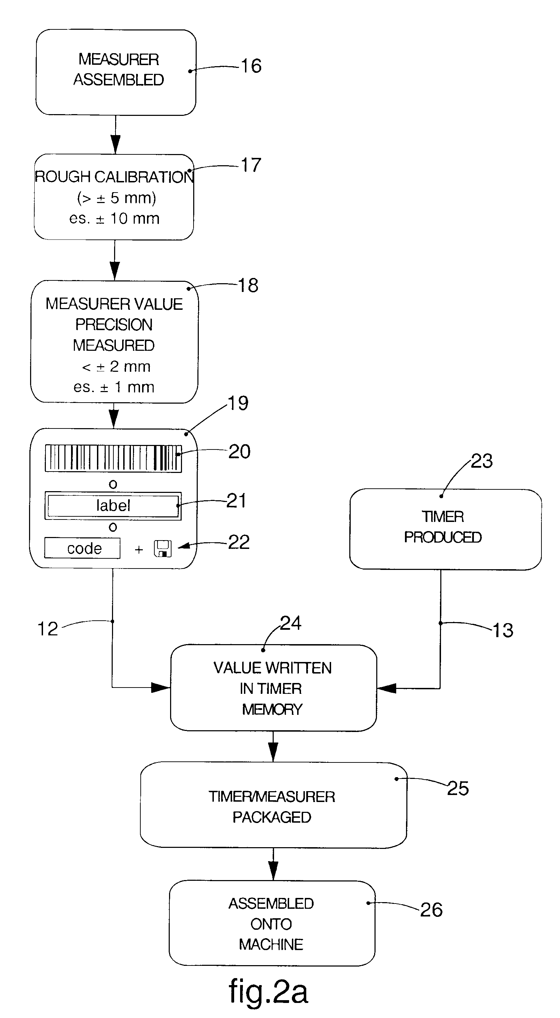

A first embodiment to achieve a control device 10 according to the invention is shown in a block diagram in Fig. 2a.

The measurer 12 is assembled in a step 16 and calibrated in a rough calibration step 17 with a very wide tolerance and in any case more than ± 5 mm, for example, as in the diagram shown, equal to ± 10 mm.

At the end of the assembly line, in a step 18, a measurement is made of its actual level detection value, that is to say, the value expressed in millimetres of a column of water, to which the measurer 12 is calibrated to be triggered during a filling cycle.

The calibration value corresponds to a specific and univocal value, (with an error range which can reach as much as ± 1 mm but in any case is less than ± 2 mm); this value is impressed, in a step 19, on any document accompanying the measurer 12, for example a bar code 20, a label 21 or a magnetic or optoelectronic diskette 22.

Parallel to the production of the measurer 12, the timer 13 is produced in a step 23.

The two distinct components are then sent, in the assembly plant, to the user machine, where the specific value of the measurer 12, detected by one or another of the supports used 20, 21 or 22, is transcribed, in a step 24, into the memory 14 of the timer 13 and used by the timer 13 as will be explained hereafter.

Finally, the two components are assembled together (step 25), and the combination thus achieved is assembled onto the user machine (step 26).

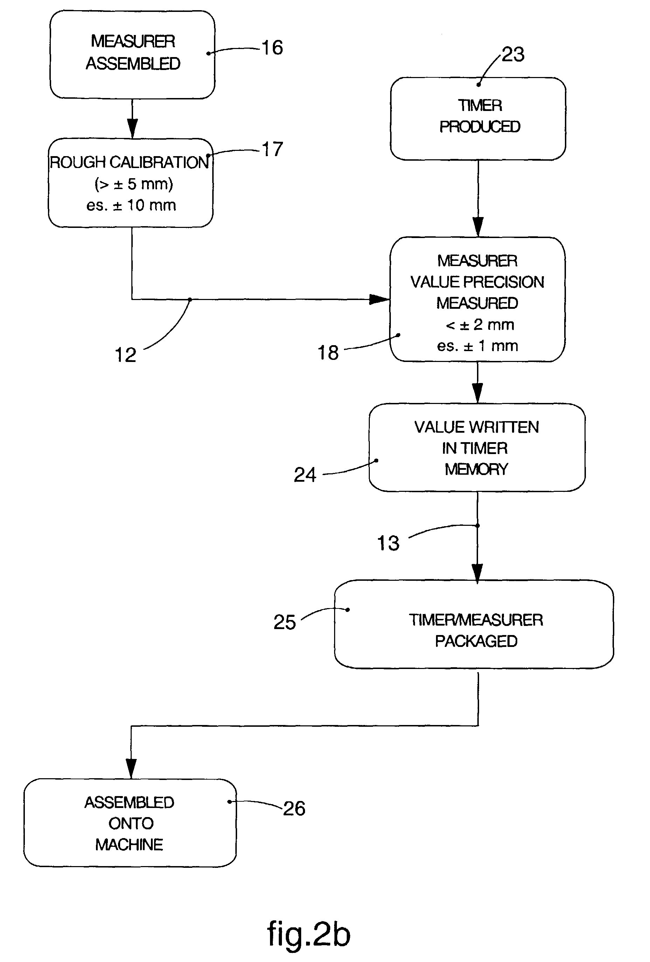

The variant shown in Fig. 2b provides that the measurer 12, assembled and calibrated with the definition of its level of tolerance, is sent to the production cycle of the timer 13, and in this cycle the actual value of measurement is detected.

Then, on the production line of the timer 13 and during the step when the program of the latter is controlled and written, step 24 is carried out, whereby the value is written into the memory 14. Finally, the two components are packaged, and the combination is then sent to where it will be assembled onto the user machine.

Using the value of the measurer 12 contained in its memory 14 and the correction coefficient linked to the geometry of the drum 11, the timer 13 calculates the filling times as follows.

During the planning stage, a parameter of correlation is obtained which links the geometry of the drum or receptacle 11 to a level value; this link can be defined, for example, by means of a table carrying a plurality of volume values $V_1$, $V_2$, ..., Vn, correlated to a plurality of corresponding level values $h_1$, $h_2$, ..., $h_n$, or by means of a univocal relation, even not linear, which links volume and level: $V = f(h)$, with a tolerance which depends on the application.

For example, in the case of a rectangular receptacle, which is a simple case even frequently used, volume and level are linked by a relationship of the type $V = Ah + B$.

This correlation parameter is memorized in the memory 14 of the timer 13. When the combination of the measurer 12 and timer 13 is assembled in the user machine, the timer 13 is able to calculate the time "$t_1$" for which the valve 15 needs to be open to fill the drum 11 up to the level $h_1$ measured by the measurer 12, corresponding to the volume $V_1$; this level is univocally defined and memorized in the memory 14 of the timer 13.

According to this measurement, the timer 13 can then calculate any opening time for the valve 15 needed to fill the drum 11 corresponding to a volume $V_2$ (in the acceptable hypothesis that the water will be delivered constantly through the valve 15), to obtain a filling volume $V_2$, from the simple formula:

$$t_2 = t_1 \times V_2/V_1$$

The ratio $V_2/V_1$ therefore constitutes the correction coefficient (k), correlated to the geometry of the drum 11, which is used to obtain levels inside the drum 11 with absolute precision, given the precision which can be ensured by the actual measurement of the value detected by the level measurer 12.

In the case of specific geometries of the drum 11 wherein the volume is a particular function (f) of the level h, the coefficient (k) will consist of the relation between the functions $f(h_1)$ and $f(h_2)$, where $h_1$ is the level corresponding to the measurement of the measurer 12 and $h_2$ is the level which it is desired to obtain during a specific filling cycle.

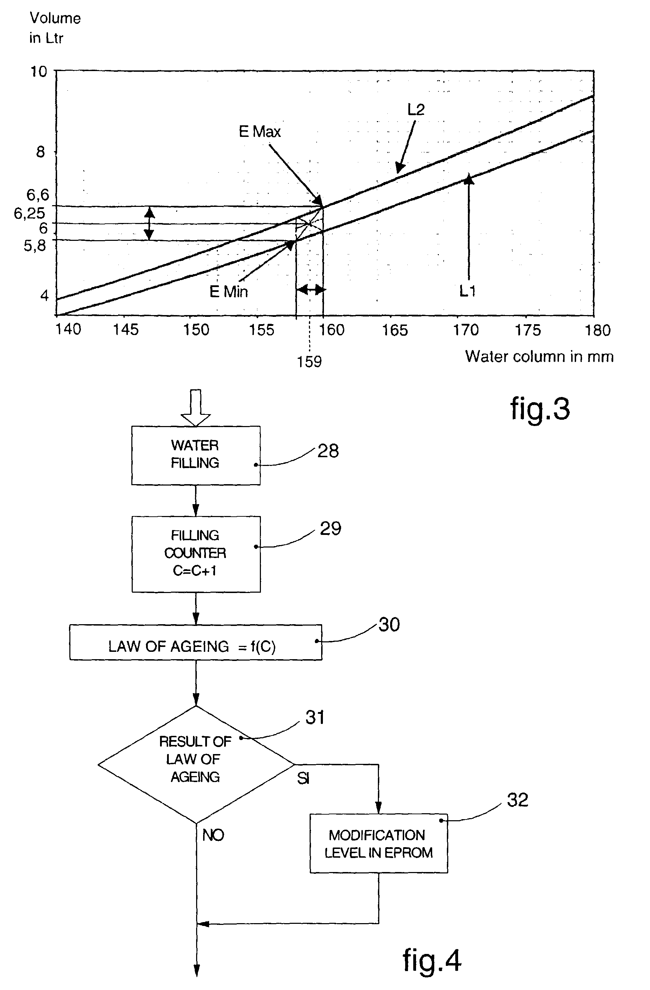

Fig. 3 shows a graph obtained experimentally for a rectangular receptacle 11, which can be used to calculate the value of the coefficient (k).

When the measurer 12 is prepared, it is calibrated to be triggered at a value of 159 mm of water, with a tolerance of $\pm 1$ mm (158÷160 mm).

The coefficient (k) is calculated by calculating the volume of water corresponding to this range of values of the measurer 12 to be applied to a specific geometry of the drum 11.

The graph in Fig. 3 shows on the x-axis a level expressed in millimetres of a column of water and on the y-axis the corresponding volume in litres; the curves L1 and L2 show the dispersion caused by the geometry of the drum 11.

The setting value (Vmis) of the measurer 12, equal to a level of 159 mm, corresponds to a volume of 6.25 litres.

When the filling volume (Vol) of the drum 11 is equal, for example, to 16.5 litres, the coefficient (k) is calculated with the following equation:

$$k = Vol/Vmis = 16.5/6.25 = 2.64$$

This value of the coefficient (k) is used by the timer 13 to calculate the opening time of the valve 15, which is:

$$t_2 = k \times t_1$$

where $t_1$ is the setting time of the measurer 12.

By calculating the volume corresponding to the minimum value of the measurer 12 within the tolerance (158 mm) on the curve L1, we obtain a value of 5.8 litres (Emin); on the contrary, by calculating the volume corresponding to the maximum calibration value (160 mm) on the curve L2, we obtain a value of 6.6 litres (Emax).

By using the value of (k) as calculated above and the values of volume identified above relating to the range of variability of the measurer 12, we obtain that the filling volumes, in the two worst cases, can vary from a minimum value of 2.64 x 5.8 = 15.31 litres to a maximum value of 2.64 x 6.6 = 17.42.

Thus we obtain an average filling value of $16.365 \pm 1.06$, improving precision by as much as 50% with respect to conventional systems.

Fig. 4 shows schematically a method which can be integrated into the memory 14 of the timer 13 in order to compensate and correct the natural ageing of the measurer 12 as the filling cycles proceed.

Every filling of water 28 is detected by updating 29 a meter.

This up-dating is communicated to a processor inside which is memorized a specific law of ageing; the processor is able to perform a correlation procedure 30 which links the number of filling cycles carried out by the measurer 12 to a possible correction of the level parameters.

The ageing law takes into account the physical parameters of the measurer 12, the type of application, the type of user machine, the type of load applied, and other operating parameters. According to this law, with every successive filling cycle, a procedure 31 verifies the possibility of modifying, in a step 32, the value of the level measured by the measurer 12 and memorized in the memory 14.

It is obvious that modifications and variants may be made to this invention, but they shall remain within the field and scope thereof. For example, as an accompanying element for the value of the measurer 12 any different support could be used, other than those cited in the description. The values of tolerance can be different from those indicated. as can the measuring procedures and the functions which link level and volume.

**Claims**

1. Method to produce devices to control levels and volumes for domestic appliances comprising at least a drum or receptacle (11) able to be selectively filled with water and emptied, said control devices comprising at least a level measurer, a programming and timing element and valve means (15) able to open and close a delivery circuit according to the commands from said programming and timing element, the method being characterized in that it comprises a step to measure a univocal value detected by the measurer (12) made during a step in its production cycle, a step of writing said value in a memory (14) of the programming and timing element (timer) (13), a step to define a correction coefficient (k) correlated to the geometry and characteristics of the domestic appliance on which the control device (10) is installed, and a step to define, by timer (13) and while the machine is working, every level which can be obtained inside the drum or receptacle (11) using said univocal value measured by the measurer (12) and said correction coefficient (k).

2. Method as in Claim 1, characterized in that said step of defining the filling levels provides that said timer (13) calculates an opening time $(t_2)$ of said valve means (15) to obtain a desired filling volume $(V_2)$ with the following formula: $t_2 = k \times t_1$ , where $t_1$ is the opening time of the valve (15) to obtain the volume $(V_1)$ corresponding to the univocal value measured by the measurer (12).

3. Method as in Claim 1 or 2, characterized in that it provides to measure the univocal value of the measurer (12) at the end of the assembly line of said measurer (12), to register it on an accompanying element, and to send the measurer (12) to the place where the timer (13) is produced, where said value is read and transcribed into the memory (14) of said timer (13).

4. Method as in Claim 3, characterized in that said accompanying element is a bar code.

5. Method as in Claim 3, characterized in that said accompanying element is a label.

6. Method as in Claim 3, characterized in that said accompanying element is magnetic or optoelectronic diskette.

7. Method as in Claim 1 or 2, characterized in that it provides to measure the univocal value of the measurer (12) during the assembly cycle of the measurer (12) with the timer (13), said value being written into the memory (14) during the step when the program of the timer (13) is controlled and written.

8. Method as in Claim 1 or 2, characterized in that it provides a step (17) of rough calibration of the measurer (12) to define a value of tolerance at least higher than ± 5 mm.

9. Method as in Claim 1 or 2, characterized in that the step (18) of measuring the value of the measurer (12) is suitable to obtain a univocal value with a precision at least less than ± 2 mm.

10. Method as in Claim 1, characterized in that it provides to calculate a volume $(V_1)$ corresponding to the volume of water contained in said drum or receptacle (11) when the level is equal to the level $(h_1)$ measured by the measurer (12), and to define the correction coefficient (k) memorized in the memory (14) of the timer (13) as the ratio between $V_i$ and $V_1$, $V_i$ being the volume of water contained in the drum (11) corresponding to a level equal to $(h_1)$.

11. Method as in Claim 1, characterized in that it provides to define a univocal function which links volume and level $V = f(h)$ , and to define the correction coefficient (k) as a relation between the functions $f(h_i)$ and $f(h_1)$, where $h_1$ is the level in the drum (11) corresponding to the measurement of the measurer (12) and $h_i$ is the level which it is desired to obtain.

12. Method as in any claim hereinbefore, characterized in that it provides a procedure to compensate and correct the natural ageing of the measurer (12), this procedure being subject to the detection of the number of filling cycles carried out by the measurer (12) and to a pre-established law of ageing which takes into account at least the type of washing apparatus and the types of load applied.

13. Device to control levels and/or volumes for domestic appliances comprising at least a drum or receptacle (11) able to be selectively filled with water and emptied by means of the selective activation of valve means (15), said device comprising at least a level measurer and a programming and timing element, the device being characterized in that said timer (13) comprises first memory means (14) on which a univocal value detected by said level measurer (12) is able to be memorized during a step of its production cycle, and in that said timer (13) is able to define, during the functioning of the domestic appliance, every level and/or volume obtainable inside said drum or receptacle (11) using said univocal value measured by the measurer (12) and a correction coefficient (k) correlated to the geometry and the characteristics of the domestic appliance.

14. Device as in Claim 13, characterized in that said timer (13) is able to calculate an opening time $(t_2)$ of said valve means (15), to obtain a desired filling volume $(V_2)$, using the following formula: $t_2 = k \times t_1$ , where $t_1$ is the opening time of the valve (15) to obtain the volume $(V_1)$ corresponding to the univocal value measured by the measurer (12).

15. Device as in Claim 13, characterized in that said level measurer (12) comprises second memory means on which said univocal value of measurement is able to be registered, at the end of the assembly line of the measurer (12), said second memory means being able to be read so that said value can be transcribed onto said first memory means (14) of the timer (13).

16. Device as in Claim 15, characterized in that said second memory means consist of a bar code.

17. Device as in Claim 15, characterized in that said second memory means consist of a label.

18. Device as in Claim 15, characterized in that said second memory means consist of magnetic or optoelectronic diskette.

19. Device as in Claim 13, characterized in that said first memory means (14) of the timer (13) are able to receive said measurement value of the level measurer (12) in the assembly step of the measurer (12) to the timer (13) and during the step when the program of said timer (13) is controlled and written.

fig.1

MEASURER
ASSEMBLED — 16

↓

ROUGH CALIBRATION — 17
(> ± 5 mm)
es. ± 10 mm

↓

MEASURER VALUE — 18
PRECISION
MEASURED
< ± 2 mm
es. ± 1 mm

↓

— 19
— 20
o
label — 21
o
code + 🖫 — 22

TIMER — 23
PRODUCED

12

13

VALUE WRITTEN — 24
IN TIMER
MEMORY

↓

TIMER/MEASURER — 25
PACKAGED

↓

ASSEMBLED — 26
ONTO
MACHINE

fig.2a

```
┌─────────────────┐
│    MEASURER     │————16
│   ASSEMBLED     │
└─────────────────┘
         │
         ▼
┌─────────────────┐
│ROUGH CALIBRATION│————17
│   (> ± 5 mm)    │
│   es. ± 10 mm   │
└─────────────────┘
```

```
                    ┌─────────────────┐
              23     │      TIMER      │
                    │    PRODUCED     │
                    └─────────────────┘
                             │
                             ▼
┌─────────────────┐
│    MEASURER     │
│ VALUE PRECISION │
│    MEASURED     │
│    < ± 2 mm     │
│   es. ± 1 mm    │
└─────────────────┘
         │
         ▼
┌─────────────────┐
│  VALUE WRITTEN  │
│    IN TIMER     │
│     MEMORY      │
└─────────────────┘
         │
         ▼
┌─────────────────────┐
│  TIMER/MEASURER     │
│    PACKAGED         │
└─────────────────────┘
```

12

18

24

13

25

```
┌─────────────────┐
│    ASSEMBLED    │————26
│      ONTO       │
│    MACHINE      │
└─────────────────┘
```

fig.2b

10

fig.3

fig.4